# EUROPEAN PATENT SPECIFICATION

(11) **EP 3 442 930 B1**
(45) Date of publication and mention of the grant of the patent: **17.11.2021**
(21) Application number: 17715940.7
(22) Date of filing: 07.04.2017
(51) Int. Cl.: C05C 5/04, C05D 9/02, C05G 3/00

(54) **PARTICULATE CALCIUM NITRATE COMPOSITION FOR FERTIGATION COMPRISING NITRATE-BASED MICRONUTRIENTS AND METHOD FOR PRODUCTION THEREOF**
TEILCHENFÖRMIGE CALCIUMNITRATZUSAMMENSETZUNG ZUR FERTIGATION AUS NITRAT-BASIERTEN MIKRONÄHRSTOFFEN UND VERFAHREN ZU DEREN HERSTELLUNG
COMPOSITION DE NITRATE DE CALCIUM PARTICULAIRE POUR LA FERTIGATION COMPRENANT DES MICRONUTRIMENTS À BASE DE NITRATE ET SON PROCÉDÉ DE PRODUCTION

(30) Priority: 14.04.2016 NO 20160624
(43) Date of publication of application: 20.02.2019
(73) Proprietor: Yara International ASA, 0277 Oslo (NO)
(72) Inventor: MYRSTAD, Amund, N-3711 Skien (NO); MARMOLEJO, Alejandro, Cartagena 130002006 (CO); FROGNER, Tore, N-3410 Sylling (NO)
(74) Representative: AWA Sweden AB
(86) International application number: PCT/EP2017/058319
(87) International publication number: WO 2017/178342

(56) References cited:
- WO-A1-00/02831
- WO-A1-97/45382
- WO-A1-02/071086
- WO-A1-2004/039722
- WO-A1-2006/031139
- WO-A1-2014/128468
- CA-A1- 2 497 633
- DE-A1- 2 045 354
- DE-C- 659 809
- US-A- 3 027 249

## Description

### Field of the invention

The present invention concerns a homogeneous solid particle comprising calcium nitrate and micronutrients, in particular zinc in the form of a zinc nitrate, a particulate composition comprising said particles, a method for the manufacture thereof, and its use as a fertilizer, in particular for fertigation applications.

### Background of the invention

The primary nutrients for plants are based on nitrogen (N), phosphorus (P) and potassium (K). However, plants also need significant amounts of secondary nutrients based on calcium (Ca), magnesium (Mg), sulphur (S) and sodium (Na). In addition, plants need small amounts of micronutrients based on boron (B), copper (Cu), iron (Fe), manganese (Mn), molybdenum (Mo) and zinc (Zn).

The primary nutrients are mainly absorbed by plants in the form of ions, such as NO₃⁻, NH₄⁺, HPO₄²⁻, H₂PO₄⁻ and K⁺.

The secondary nutrients are mainly absorbed by plants in the form of ions, such as Ca²⁺, Mg²⁺, SO₄²⁻ and Na⁺.

The micronutrients are mainly absorbed by plants in the form of ions, such as Cu²⁺, Fe²⁺, Mn²⁺, MoO₄²⁻ and Zn²⁺. Boron is mainly absorbed as H3BO3.

Fertilizer products are designed to provide said nutrients to plants. Some fertilizers may, for example, provide all the nutrients, while other fertilizer products may provide a selection of primary-, secondary- and micronutrients. The fertilizer products can be specialized in order to meet specific agronomic requirements of the crop for which they are to be used. The fertilizer products may also be specialized with respect to the soil for which they are intended.

A fertilizer product including micronutrients solves the problem of providing micronutrients to plants in an efficient way, i.e. together with the primary nutrients, in a chemical form that is available for take-up by the plants and in a dosage form (mostly liquid or solid particulate fertilizer particles) that is easily applied onto the field where the plants are cultivated, either as a solid composition, or as a liquid solution.

Typically, micronutrients are applied either as a coating onto solid fertilizer particles, being granules, prills, flakes and the like, or are blended into the bulk of fertilizer powders or fertilizer solutions.

Especially with regard to zinc, several different zinc compounds have been utilized as a source for micronutrients, but zinc sulphate is by far the most widely used source (see Alloway *et al*, 2008, Zinc in Soils and Crop Nutrition, International Fertilizer Industry Association).

When combined with a calcium nitrate based fertilizer, such as a calcium ammonium nitrate fertilizer, it is well known that blending of calcium nitrate with sulphate salts will lead to the formation of gypsum, which is rather insoluble and poorly available for plants. Furthermore, coating of hygroscopic fertilizer particles, such as calcium ammonium nitrate particles, often involves non-aqueous spraying solutions, such as oils and waxes, as calcium ammonium nitrate is a hygroscopic material that liquefies upon contact with water, as disclosed in WO2014/128468_(Yara UK, 28 August 2014). However, non-aqueous spraying coatings, such as oily coatings may have a too low aqueous solubility for use in fertigation application or may have their limitations concerning amount of micronutrient that can be applied onto the solid fertilizer particles.

Homogeneous solid fertilizer particles which can be applied to the crops on the field by spreading machines, can also provide micronutrients in a coating that is basically used to reduce dust formation and caking during handling and storage, as is suggested in WO1999/15480 (Norsk Hydro, 1 April 1999) or in WO2015/ 132261 (Yara International ASA, 11 September 2015). When micronutrients are present in a coating of solid fertilizer particles, the release rate of the micronutrients is higher in the beginning of the dissolution phase (burst-release), but for many (non-fertigation) applications, it is preferable to have a more uniform release rate of the micronutrient. The latter can be achieved by blending the micronutrient compounds into the bulk of the solid fertilizer particles.

Several prior art documents mention solid particulate fertilizers containing calcium nitrate and micronutrients.

WO2006/031139 (Nawrocki, 23 March 2006) discloses homogeneous solid calcium ammonium nitrate flakes comprising chelated micronutrients such as zinc, and a method for the manufacturing thereof, based on a cooling belt device. Such flakes are difficult to distribute over the field.

WO1991/09818 (Danneskiold, 11 July 1991) discloses a micronutrient fertilizer composition in the form of dry aggregate bodies (pressed pellets) comprising about 10 weight% of calcium nitrate, 8.3 weight% of ammonium nitrate and 5.1 weight% of zinc sulphate, which are adapted to be mixed with a macronutrient fertilizer composition. The pellets were obtained by applying wheat bran as a binder. They do not contain zinc nitrate.

CA1212257 (Kaeppner, 7 October 1986) exemplifies a dry mixture comprising calcium nitrate and zinc nitrate. The mixture can be applied either as an aqueous solution or in the dry form as a surface dressing.

WO1997/45382 (Norsk Hydro, 4 December 1997) discloses a homogeneous calcium ammonium nitrate based fertilizer containing sulphur (as gypsum and/or a slow reacting sulphate mineral) and optionally magnesium, selenium, cobalt and micronutrients like Mn, Cu, B, and Zn, in the form of prills or granules. Cobalt is added as a sulphate salt and no information is given on the source of the zinc micronutrients.

CA2497633A1 (Kaeppner, 2006) discloses a fertilizer particulate composition comprising 73 weight% of calcium nitrate, 2.4 weight% of potassium nitrate, 0.24 weight% of zinc nitrate, and borax.

### Summary of the invention

The present invention provides an improved homogeneous solid particle based on calcium nitrate and at least one micronutrient, wherein at least one micronutrient is present as a nitrate salt and as a chelate of zinc. The present invention relates to a homogeneous solid particle according to the appended claims. The particle according to the invention reduces the need for expensive micronutrient sources like chelated micronutrients. When the particle according to the invention is dissolved in water, the turbidity of the resulting solution is low over a wide range of pH, indicating a very good solubility. The particle according to the invention contains both zinc nitrate and chelated zinc, and it can be used as a fertilizer, either in solid or in liquid form, on soils having acidic, neutral and alkaline soil conditions, i.e. over a broad pH-range. The particle according to the invention can efficiently be applied to the crops by spreading machines or be used in fertigation applications. The particle according to the invention is furthermore less dusty and more abrasion resistant than flakes. The particle according to the invention is also suitable for greenhouse applications.

In a first embodiment, the present invention concerns a homogeneous solid particle comprising at least 50 weight% of calcium nitrate (calculated as Ca(NO₃)₂), 0 to 10 weight% of one or more of ammonium nitrate, potassium nitrate and sodium nitrate, and 0.01 to 0.2 weight% of at least one micronutrient, wherein at least one micronutrient is present as a zinc nitrate salt and as a zinc chelate, wherein zinc is bonded to a chelant selected from the group of ethylene diamine tetraacetic acid (EDTA), N-(hydroxyethyl)-ethylenediaminetriacetic acid (HEDTA), ethylene glycol tetraacetic acid (EGTA), ethylenediamine-N,N'-bis(2-hydroxyphenylacetic acid) (EDDHA), ethylenediamine-N,N'-bis-(2-hydroxy 5-sulpho) phenylacetic acid (EDDHSA) and diethylenetriaminepentaacetic acid (DTPA).

In a second embodiment, the present invention concerns a homogeneous solid particle according to the first embodiment, wherein the particle's shape is spherical.

In a third embodiment, the present invention concerns a homogeneous solid particle according to any one of the first to the second embodiment, comprising 0.01 to 0.2 weight% of zinc.

In a fourth embodiment, the present invention concerns a homogeneous solid particle according to any one of the first to the third embodiment, wherein the nitrate salt comprises zinc nitrate, preferably from 0.03 to 0.6 weight% of zinc nitrate.

In a fifth embodiment, the present invention concerns a homogeneous solid particle according to any one of the first to the fourth embodiment, wherein the at least one micronutrient which is present as a chelate, is selected from the group of ethylene diamine tetraacetic acid (EDTA), N-(hydroxyethyl)-ethylenediaminetriacetic acid (HEDTA), and ethylene glycol tetraacetic acid (EGTA) .

In a sixth embodiment, the present invention concerns a homogeneous solid particle according to the fifth embodiment, wherein the micronutrient is zinc.

In a seventh embodiment, the present invention concerns a homogeneous solid particle according to the sixth embodiment comprising zinc EDTA.

In a eight embodiment, the present invention concerns a homogeneous solid particle according to any one of the first to the seventh embodiment, wherein the calcium nitrate is selected from the group of anhydrous Ca(NO₃)₂, Ca(NO₃)₂·2H₂O, Ca(NO₃)₂·3H₂O, Ca(NO₃)₂·4H₂O and 5Ca(NO₃)₂·NH₄NO₃·10H₂O.

In an nineth embodiment, the present invention concerns a homogeneous solid particle according to any one of the first to the eighth embodiment, comprising 60 to 90 weight% of calcium nitrate, 1 to 10 weight% of ammonium nitrate, 1 to 20 weight% of water and 0.03 to 0.6 weight% of at least one micronutrient in the form of a nitrate salt, preferably zinc nitrate.

In a tenth embodiment, the present invention concerns a homogeneous solid particle according to any one of the first to the nineth embodiment, comprising of 60 to 90 weight% of calcium nitrate, 0.1 to 10 weight% of ammonium nitrate, 1 to 20 weight% of water, 0.03 to 0.6 weight% of zinc nitrate and 0.01 to 0.5 weight% of chelated zinc.

In an eleventh embodiment, the present invention concerns a particle according to any one of the first to the tenth embodiment which further comprises a coating for reduction of caking, moisture uptake, or dust formation.

In a twelfth embodiment, the present invention concerns a particle according to any one of the first to the eleventh embodiment coated with a water-soluble coating.

In a thirteenth embodiment, the present invention concerns a particle according to the twelfth embodiment wherein the water-soluble coating contains a boron source, preferably boric acid.

In a fourteenth embodiment, the present invention concerns a particulate composition comprising the particles according to any one of the first to the thirteenth embodiment.

In a fifteenth embodiment, the present invention concerns a particulate composition according to the fourteenth embodiment, for use as a fertilizer, in particular for use in fertigation.

In a sixteenth embodiment, the present invention concerns the use of a particulate composition according to the fourteenth embodiment as a fertilizer, in particular for use in fertigation.

In a seventeenth embodiment, the present invention concerns a homogeneous solid particle according to any one of the first to the tenth embodiment, made by granulation of a melt, made by mixing calcium nitrate, ammonium nitrate, water and an aqueous solution comprising a micronutrient in the form of a dissolved nitrate salt.

In an eighteenth embodiment, the present invention concerns a homogeneous solid particle according to any one of the first to the tenth embodiment, made by granulation of a melt, made by mixing calcium nitrate, ammonium nitrate, water and an aqueous solution comprising dissolved zinc nitrate.

In a nineteenth embodiment, the present invention concerns a method for producing homogeneous fertilizer particles comprising the steps of
a. providing a first aqueous solution comprising dissolved calcium nitrate, dissolved ammonium nitrate and dissolved zinc nitrate and zinc EDTA in an amount sufficient to obtain an aqueous solution comprising 0.01 to 0.2 weight% of zinc;
b. heating the first aqueous solution to a temperature above 150°C to evaporate an amount of water and to obtain a second aqueous solution;
c. granulating particles from the second aqueous solution by spraying it through at least one nozzle, wherein the droplets are cooled by a cooling medium to a temperature of 100°C or lower for solidification.

In a twentieth embodiment, the present invention concerns a method according to the nineteenth embodiment, including a further step before the granulation step c) wherein water is evaporated from the second aqueous solution until the water content of said second aqueous solution is below 20 weight%.

In a twentyfirst embodiment, the present invention concerns a method according to any one of the nineteenth to the twentieth embodiment, wherein the first aqueous solution comprises more than 50 weight% of dissolved calcium nitrate and more than 30 weight% of water.

In a twenty-second embodiment, the present invention concerns a method according to any one of the nineteenth to the twentyfirst embodiment, wherein the particles produced by step c) are subsequently coated with a water-soluble coating, optionally comprising further micronutrients.

### Brief description of the figures

Figure 1 illustrates any cross section of spherical particles having a spherical (A), near-spherical (B) or roughly spherical (C) shape. Any cross section of coated and spherical particles having a spherical (D), near-spherical (E) or roughly spherical shape (F) is also illustrated with the coating, depicted as a black line. The cross section of prior art flakes is illustrated in (G) and (H).

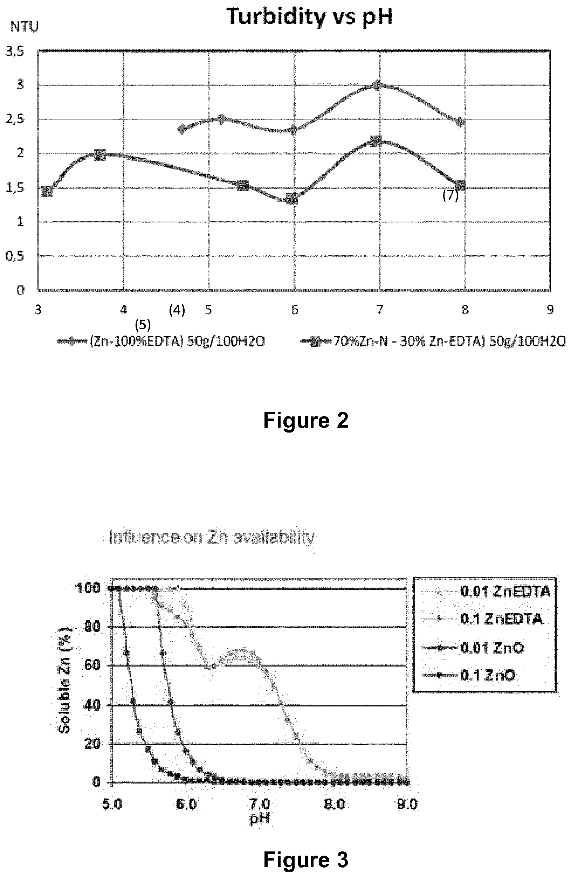

Figure 2 shows the turbidity versus the pH of solutions, made by dissolving 50 grams of fertilizer particles in 100 ml water. Upper line (prism) : 50 g of homogeneous spherical particles comprising 75 weight% calcium nitrate, 8 weight% ammonium nitrate, 15 weight% water and 0.6 weight% zinc EDTA (providing 100 % of the zinc), coated with 0.1 weight% Novoflow 99044, providing 0.3 weight% boric acid, dissolved in 100 ml water. Lower line (square): 50 g of homogeneous spherical particles comprising 76 weight% calcium nitrate, 8 weight% ammonium nitrate, 15 weight% water, 0.2 weight% zinc EDTA (30 % of the Zn)and 0.2 weight% zinc nitrate (70 % of the zinc), coated with 0.1 weight% Novoflow 99044, providing 0.3 weight% boric acid, dissolved in 100 ml water.
Figure 3 shows the influence of the pH on the zinc availability for different chemical forms of zinc (Zn EDTA and ZnO).
Figure 4 shows the solubility of a calcium nitrate (CN) + B + Zn(EDTA) + Zn-nitrate fertilizer (in gram CN per 100 ml of water) as a function of concentration and pH.
Figure 5 shows the pH of a calcium nitrate + B + Zn(EDTA) + Zn-nitrate fertilizer (in gram CN per 100 ml of water) as a function of concentration.

### Detailed description of the invention

The present invention provides a homogeneous solid particle comprising at least 50 weight% of calcium nitrate (calculated as Ca(NO₃)₂), 0 to 10 weight% of one or more of ammonium nitrate, potassium nitrate and sodium nitrate, and 0.01 to 0.2 weight% of at least one micronutrient, wherein at least one micronutrient is present as a zinc nitrate and as a zinc chelate. These particles can be efficiently applied to the crops by spreading machines or rapidly dissolved in water for fertigation applications.

Due to low solidification temperature, pure calcium nitrate particles are generally difficult to produce by conventional granulation techniques like prilling. Addition of other salts to the fluids (commonly called melt or solution) can affect the granulation substantially. For example, the addition of ammonium nitrate to a calcium nitrate melt, improves solidification properties (See WO2000/02831, Norsk Hydro, 20 January 2000). Undercooling of mixtures of calcium nitrate and potassium nitrate is well known to cause problems during granulation like prilling (see WO1997/15536, Norsk Hydro, 1 May 1997). In fact, any water-soluble salt present in the melt will affect the granulation process. Furthermore, such granulation processes are not easily tested on a small scale. In the light of the aforementioned, it is not at all obvious finding an alternative micronutrient source for calcium nitrate particles which is suitable for a large scale process and which does not, or to a small extent, influence the formation of calcium nitrate particles in a negative way.

The present invention provides homogeneous solid calcium nitrate particles comprising at least one micronutrient, wherein at least one micronutrient is present as a zinc nitrate and as a zinc chelate. The particles can be produced by granulation of a fluid containing the at least one micronutrient, e.g. by addition of a zinc nitrate solution to a calcium nitrate solution/melt before granulation.

As used herein, a melt is a heated fluid comprising completely and/or partly dissolved salts with a low water content, in particular lower than 30 weight%, more in particular lower than 20 weight%.

Calcium nitrate has become a large and important product in the fertilizer field and also for many other technical applications such as waste water treatment, the concrete industry, etc.

The homogeneous fertilizer particles according to the present invention contain a substantial amount of calcium nitrate. Solid crystalline calcium nitrate is commonly found as hydrates such as Ca(NO₃)₂·4H₂O, Ca(NO₃)₂·3H₂O and Ca(NO₃)₂·2H₂O. Ca(NO₃)₂·4H₂O is a very common salt with a melting point of 42°C. It contains 68 to 69 weight % of calcium nitrate and about 30 weight % of water. It is the main component of YaraLiva® Calcinit (Yara International ASA).

The traditional method for making calcium nitrate tetrahydrate [Ca(NO₃)₂·4H₂O] is by means of crystallization of a solution high in calcium nitrate which is cooled down below the saturation point of the calcium nitrate tetrahydrate. The solution is then filtered, through which wet calcium nitrate tetrahydrate crystals are deposited on a filter. The crystals are removed from the filter and dried in a vacuum at a temperature of below 40°C.

Optionally, also ammonium nitrate, potassium nitrate and/or sodium nitrate may be present.

According to the invention, the amount of ammonium nitrate, potassium nitrate and/or sodium nitrate may range between 0 and 10 weight%, preferably between 0.1 and 10 weight%, more preferably between 1 and 10 weight%, still more preferably between 5 and 10 weight%.

According to one embodiment, such a melt has a water content of between 15 and 18 weight % and comprises between 6 and 8 weight % of ammonium nitrate, potassium nitrate and/or sodium nitrate in addition to about 78 % of calcium nitrate. The ammonium nitrate, potassium nitrate and/or sodium nitrate and the water are necessary to form a melt around 100 °C and 110 °C, which solidifies quickly into prills or granules, depending on the granulation method being used. According to one embodiment, such as calcium nitrate is calcium ammonium nitrate decahydrate (5Ca(NO₃)₂·NH₄NO₃·10H₂O), which is produced by Yara International ASA in the form of prills and granules.

In WO2000/02831 (Norsk Hydro, 20 January 2000) a product is described, comprising 1.5 to 5.5 % by weight of K (as KNO₃), 13 to 18 % by weight of water and 70 to 80 % by weight of Ca(NO₃)₂. The product is marketed as Nitcal/K®. Such product can also suitably be used in the present invention as a basis for combining with at least one micronutrient, wherein at least one micronutrient is present as a nitrate salt.

Furthermore, also anhydrous calcium nitrate can suitably be used in the present invention.

Hence, as used herein, when referring to calcium nitrate as such, one refers to all chemical forms of calcium nitrate, in particular anhydrous Ca(NO₃)₂, Ca(NO₃)₂·2H₂O, Ca(NO₃)₂·3H₂O, Ca(NO₃)₂·4H₂O and 5Ca(NO₃)₂·NH₄NO₃·10H₂O.

As used herein, when referring to the weight% of calcium nitrate, one refers to the relative weight of calcium nitrate as if it was present in anhydrous form, irrespective of the degree of hydration, as many calcium nitrate salts are hydrated. Thus, compositions comprising calcium nitrate will usually also comprise water as hydrates. Accordingly, a particle according to present invention comprising for example 75 weight% of calcium nitrate could also comprise for example 15 weight% of water.

According to a first aspect of the first embodiment, the particle comprises 50 to 90 weight% of calcium nitrate, 0.1 to 10 weight% of one or more of ammonium nitrate, potassium nitrate and sodium nitrate.

According to a second aspect of the first embodiment, the particle comprises 60 to 90 weight% of calcium nitrate and 0.1 to 10 weight% of one or more of ammonium nitrate, potassium nitrate and sodium nitrate.

According to a third aspect of the first embodiment, the particle comprises 70 to 90 weight% of calcium nitrate and 0.1 to 10 weight% of one or more of ammonium nitrate, potassium nitrate and sodium nitrate.

According to a fourth aspect of the first embodiment, the particle comprises 80 to 90 weight% of calcium nitrate and 0.1 to 10 weight% of one or more of ammonium nitrate, potassium nitrate and sodium nitrate.

According to a fifth aspect of the first embodiment, the particle comprises 70 to 80 weight% of calcium nitrate and 0.1 to 10 weight% of one or more of ammonium nitrate, potassium nitrate and sodium nitrate.

According to a sixth aspect of the first embodiment, the particle comprises 70 to 90 weight% of calcium nitrate, 0.1 to 10 weight% ammonium nitrate.

According to a seventh aspect of the first embodiment, the particle comprises 80 to 90 weight% of calcium nitrate, 0.1 to 10 weight% of ammonium nitrate.

According to an eighth aspect of the first embodiment, the particle comprises 70 to 80 weight% of calcium nitrate, 0.1 to 10 weight% of ammonium nitrate.

For example, a homogeneous fertilizer particle according to the present invention may contain 75 weight% of calcium nitrate, 8 weight% of ammonium nitrate, 15% of water and 0.01 to 0.2 weight% of at least one micronutrient, wherein at least one micronutrient is present as a nitrate salt.

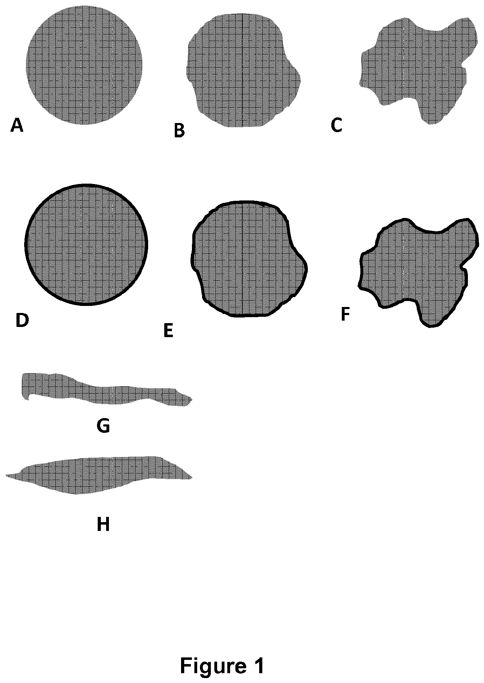

As used herein, when a particle's shape is spherical, it means that the particle has a spherical, nearly spherical or roughly spherical shape in any cross section (see Figure 1). Such spherical particles can be obtained by granulation techniques like prilling or agglomeration. Spherical particles are suitable for spreading on the fields by spreading machines, provided they have sufficient physical strength and density. They are suitable for spreading on the fields by spreading machines like centrifugal spreaders and pneumatic spreaders.

As used herein, the largest diameter of the particle is the diameter of the largest cross section through the particle. For a nearly spherical particle, all largest diameters of all cross sections are all nearly identical.

As used herein, the smallest diameter of the particle is the diameter of the smallest cross section through the particle. For a nearly spherical particle, all smallest diameters of all cross sections are all nearly identical. Furthermore, for a nearly spherical particle, the largest diameter is nearly equal to the smallest diameter of the particle.

According to a first aspect of the second embodiment, the largest diameter of the particle is in the range of 1 to 10 mm.

According to a second aspect of the second embodiment, the largest diameter of the particle is in the range of 1 to 8 mm.

According to a third aspect of the second embodiment, the largest diameter of the particle is in the range of 3 to 6 mm.

According to a fourth aspect of the second embodiment, the largest diameter of the particle is in the range of 2 to 4 mm.

According to a fifth aspect of the second embodiment, the smallest and the largest diameter of the particle are in the range of 1 to 10 mm.

According to a sixth aspect of the second embodiment, the smallest and the largest diameter of the particle are in the range of 3 to 6 mm.

According to a seventh aspect of the second embodiment the smallest and the largest diameter of the particle are in the range of 2 to 4 mm.

According to an eighth aspect of the second embodiment, the ratio between the smallest diameter of the particle and the largest diameter of the particle is from 0.2 to 1.0.

According to a ninth aspect of the second embodiment, the ratio between the smallest diameter of the particle and the largest diameter of the particle is from 0.3 to 1.0.

According to a tenth aspect of the second embodiment, the ratio between the smallest diameter of the particle and the largest diameter of the particle is from 0.4 to 1.0.

According to an eleventh aspect of the second embodiment, the ratio between the smallest diameter of the particle and the largest diameter of the particle is from 0.5 to 1.0.

According to a twelfth aspect of the second embodiment, the ratio between the smallest diameter of the particle and the largest diameter of the particle is from 0.6 to 1.0

According to a thirteenth aspect of the second embodiment, the ratio between the smallest diameter of the particle and the largest diameter of the particle is from 0.7 to 1.0

According to a fourteenth aspect of the second embodiment, the ratio between the smallest diameter of the particle and the largest diameter of the particle is from 0.8 to 1.0

According to a fifteenth aspect of the second embodiment, the ratio between the smallest diameter of the particle and the largest diameter of the particle is from 0.9 to 1.0

A homogeneous solid particle, as used herein, means that the solid particle is uniform with respect to its composition throughout the particle. In contrast, a heterogeneous particle varies in its composition throughout the particle. Homogeneous solid particles may be coated for improving the robustness as disclosed below. Accordingly, by coating a homogenous solid particle, a heterogeneous particles may be obtained. The micronutrient content in fertilizers is herein disclosed as weight%. When a fertilizer is said to contain a weight% of a micronutrient, the value reflects the relative net amount of the element, independent of its form in which it is absorbed by the plants. Thus, a fertilizer particle comprising 0.01 to 0.2 weight% of zinc means that it comprises a zinc source providing 0.01 to 0.2 weight% of the zinc element, whereas, preferably, the zinc element is present as a zinc ion in a salt. Accordingly, a fertilizer particle containing 0.03 to 0.6 weight% of zinc nitrate has a content of 0.01 to 0.2 weight% of zinc. Accordingly, a fertilizer particle containing 0.05 to 1.1 weight% of zinc EDTA has a content of 0.01 to 0.2 weight% of zinc.

According to one aspect of the first embodiment, the micronutrient is a nitrate salt, selected from the group of zinc nitrate, in particular zinc (II) nitrate ; whereas all of these compounds may be hydrated.

The at least one micronutrient is zinc, e.g. present as zinc nitrate.

The micronutrient is also partly present as a chelated ion. Hence, the invention relates to a homogeneous solid particle comprising at least 50 weight% of calcium nitrate (calculated as Ca(NO₃)₂), 0 to 10 weight% of one or more of ammonium nitrate, potassium nitrate and sodium nitrate, and 0.01 to 0.2 weight% of at least one micronutrient, wherein at least one micronutrient is present as a nitrate salt and at least one micronutrient is present as a chelate. According to one embodiment, said micronutrients may be the same or different.

Chelating is a type of bonding of ions and molecules to metal ions. It involves the formation or presence of two or more separate coordinate bonds between a polydentate (multiple bonded) ligand and a single central atom Usually, these ligands are organic compounds, and are called chelants, chelators, chelating agents, or sequestering agents.

Many micronutrients can be provided as chelated ions. One example is zinc, which may be provided as ethylene diamine tetraacetic acid (zinc EDTA). This compound may be available as a solid like ethylene diamine tetraacetic acid disodium zinc salt tetrahydrate, or it may be available as a complex in an aqueous solution. In the examples herein, zinc EDTA is referring to [EDTA.Zn] Na₂ (CAS number: 14025-21-9), commercially available e.g. as Dissolvine E-Zn-15 from AkzoNobel.Chelated micronutrients are marketed by, for instance, Solufeed Ltd (West Sussex, UK), either as single metals or as mixtures of micronutrients.

As used herein, a micronutrient which is present as a chelate, means that the micronutrient element or ion is bonded to a chelant into a chelated compound, the chelate. Any compound that is suitable as a chelant is comprised within this definition. For example, chelated zinc means zinc-containing compounds wherein zinc ions are chelated. The term includes zinc EDTA, disodium zinc EDTA, sodium zinc EDTA, sodium zinc HEDTA, etc.

Hence, the term chelant comprises molecules such as ethylene diamine tetraacetic acid (EDTA), N-(hydroxyethyl)-ethylenediaminetriacetic acid (HEDTA), ethylene glycol tetraacetic acid (EGTA), ethylenediamine-N,N'-bis(2-hydroxyphenylacetic acid) (EDDHA), ethylenediamine-N,N'-bis-(2-hydroxy 5-sulpho) phenylacetic acid (EDDHSA) and diethylenetriaminepentaacetic acid (DTPA) and the like.

Surprisingly, it has been observed that zinc nitrate positively affected the granulation process and decreases the risk of caking, whereas the flakes disclosed in WO2006/031139 (Nawrocki, 23 March 2006) are not suitable for storage and transport according to WO2009/008845 (Duslo, 1 January 2009).

Furthermore, since chelated micronutrients are more expensive than their simple salts, the present invention also provides homogeneous calcium nitrate particles with an alternative and cheaper micronutrient source, e.g. zinc nitrate.

Furthermore, surprisingly, a particle was provided which is useful as a zinc-containing fertilizer on soils with acidic, neutral and alkaline soil conditions. This obviates the need for more than one zinc-containing fertilizer that can be used on soils with either acidic, neutral or alkaline soil conditions.

The acidic, neutral and alkaline soil conditions are meant to cover soils with a pH ranging from about 3 to about 9, in particular from about 5 to about 8.

At neutral or alkaline pH, many unchelated micronutrient ions have a tendency to precipitate as hydroxides. For example, zinc ions precipitate as zinc hydroxide. However, as demonstrated in Example 2 below, solutions made of the particles of Example 1, displayed a low turbidity (comparable to drinking water) at acidic, neutral and alkaline pH. The turbidity results thus indicate that even in fertigation solutions, where fairly concentrated solutions are used, the particles will provide zinc in a water-soluble form that is available for the plants. Without wishing to be bound by theory, this surprising result may be caused by a salting-in effect.

According to one particular embodiment of the present invention, the particles are homogeneous, spherical, solid particles comprising 70 to 80 weight% of calcium nitrate, 5 to 10 weight% of ammonium nitrate, 5 to 20 weight% of water and about 0.3 weight% of zinc nitrate.

According to another particular embodiment of the present invention, the particles are homogeneous, spherical, solid particles comprising 70 to 80 weight% of calcium nitrate, 5 to 10 weight% of ammonium nitrate, 5 to 20 weight% of water and about 0.2 weight% of zinc nitrate and about 0.2 weight% of zinc EDTA.

According to another particular embodiment of the present invention, the particles are homogeneous, spherical, solid particles, comprising about 76 weight% of calcium nitrate, about 8 weight% of ammonium nitrate, about 0.3 weight% of boric acid, about 0.2 weight% of zinc nitrate, about 0.2 weight% of zinc EDTA, about 15 weight% of water, and optionally a coating, the weight of all components adding up to 100 %.

Optionally, a coating may be applied for reduction of caking, moisture uptake, or dust formation. According to one embodiment, such coating is a water-soluble coating as this coating may dissolve rapidly in a soil or in fertigation or greenhouse applications. The coating may further be combined with micronutrients that are applied as a coating. Any micronutrient is suitable to be combined with said coating, such as, for example, copper, iron, manganese, molybdenum, zinc and boron. Preferably, the coating contains a boron source, preferably boric acid.

The invention is further directed to a particulate composition comprising the particles according to the invention. The particles in the particulate composition do not need to have the same composition. For example, the particulate composition may have coated and non-coated particles according to the invention, particles coated with different micronutrients or with different amounts, particles comprising only one or more micronutrients as a nitrate salt, and particles comprising one or more micronutrients as a nitrate salt and one or more micronutrients as a chelate.

Preferably, the particulate composition according to the invention is used as a fertilizer, in particular for use in fertigation.

The homogenous fertilizer particle in the present disclosure can be produced by granulation of a homogenous melt. One example can be prilling which produces reasonably uniform spherical particles from melts by first producing liquid droplets and then solidifying them by cooling as they fall through a rising cooling air stream. When prilling a calcium nitrate melt, addition of ammonium nitrate, potassium nitrate and/or sodium nitrate can make the melt solidify more quickly. However, if making calcium nitrate tetrahydrate, the presence of ammonium nitrate, potassium nitrate or sodium nitrate can be omitted. To such melts, micronutrients can be added as aqueous solutions comprising dissolved nitrate salts, e.g. zinc nitrate.

Homogenous fertilizer particles in the present disclosure can also be produced by pan granulation (layering of droplets/agitation) or by the cooling belt technology, as disclosed in WO2006/031139 (Nawrocki, 23 March 2006).

The term about is used to reflect manufacturing and analytical measurement variations of plus or minus 5 % on the absolute amounts.

The present invention is defined by the claims and not by the following examples, which only serve to exemplify one or more embodiments.

### Examples

In the examples herein, zinc EDTA is referring to [EDTA.Zn] Na₂ (CAS number: 14025-21-9), commercially available e.g. as Dissolvine E-Zn-15 from AkzoNobel.

### Example 1

To 110 tons of a neutral (pH 7) aqueous solution comprising 60 weight% of calcium nitrate and 6 weight% of ammonium nitrate was added 352 kg of an aqueous solution (pH 2) comprising 50 weight% of zinc nitrate and 396 kg of an aqueous solution comprising 45 weight% of zinc EDTA. After mixing, the water was evaporated at about 156°C, 1 bar absolute pressure, until the concentration of water was about 17 weight%. This solution was sprayed through nozzles, whereby the droplets were cooled to 70-100°C for solidification in a pan granulator. The particles were screened with respect to size. The particles were fed into an inclined rotating coating drum with a first section containing lifters to create a falling curtain of granules. In the first section, a coating solution was sprayed through nozzles. Close to the particle and coating inlet, boric acid powder was also fed. A second section of the inclined rotating coating drum contained ventilation outlet and the outlet for the coated particles.

Four samples were collected from the production batch. Three samples were collected by extracting a small volume of particles at three different time points, while one sample (Production sample) was collected by extracting particles during the whole production.

The particles were dissolved in water and tested using validated analytical methods. The results are shown in Table 1. The values in the table show the weight%. n.m. means that the analysis was not performed. Some of the analyses give indirect results only, like CaO, which is not present in the particles or only present in small amounts. The pH was measured at standard conditions in an aqueous solution comprising 10 weight% of particles.

We can see from the results that the particles contained about 75 weight% of calcium nitrate, about 15 weight% of water, about 8 weight% of ammonium nitrate, about 0.3 weight% of boric acid, about 0.2 weight% of zinc nitrate and about 0,2 weight% of zinc EDTA.

**Table 1**

| Analysis | **Sample 1** | **Sample 2** | **Sample 3** | **Production sample** |
|---|---|---|---|---|
| **pH (10%)** | n.m. | n.m. | n.m. | 6.18 |
| **% Free H₂O** | n.m. | n.m. | n.m. | 0.60 |
| **Ca(NO₃)₂, %** | 75.87 | 76.05 | 75.14 | 75.76 |
| **NH₄NO₃,** % | n.m. | n.m. | n.m. | 8.11 |
| **H₃BO₃, %** | 0.31 | 0.44 | 0.27 | 0.34 |
| **Zn(NO₃)₂, %** | 0.20 | 0.20 | 0.20 | 0.20 |
| **Zn EDTA, %** | 0.20 | 0.20 | 0.19 | 0.20 |
| **H₂O, %** | n.m. | n.m. | n.m. | 15.40 |

### Example 2

A test of solubility (measured as turbidity, NTU, Nephelometric Turbidity Units) demonstrated that homogeneous fertilizer particles comprising 0.2 weight% zinc nitrate and 0.2 weight% zinc EDTA (particles produced in Example 1) displayed lower turbidity over a wide pH range compared to particles comprising 0.6% zinc EDTA when 50 grams of the particles were dissolved in 100 ml water (see Figure 2).

### Example 3

Figure 3 shows the influence of pH on Zn availability of ZnO and Zn-EDTA. ZnO solubility is reduced when pH is increase above 5 - 6, depending on its concentration. The solubility of Zn from Zn-EDTA is reduced when pH is above 5.5 - 6.0, depending on its concentration. The solubility increases somewhat when pH is increased to pH about 7. At higher pH the solubility decreases significantly. At pH 8, Zn from Zn- EDTA is not available. This shows that the particles according to the invention provide zinc in a pH range of at least 5 to 8.

### Example 4

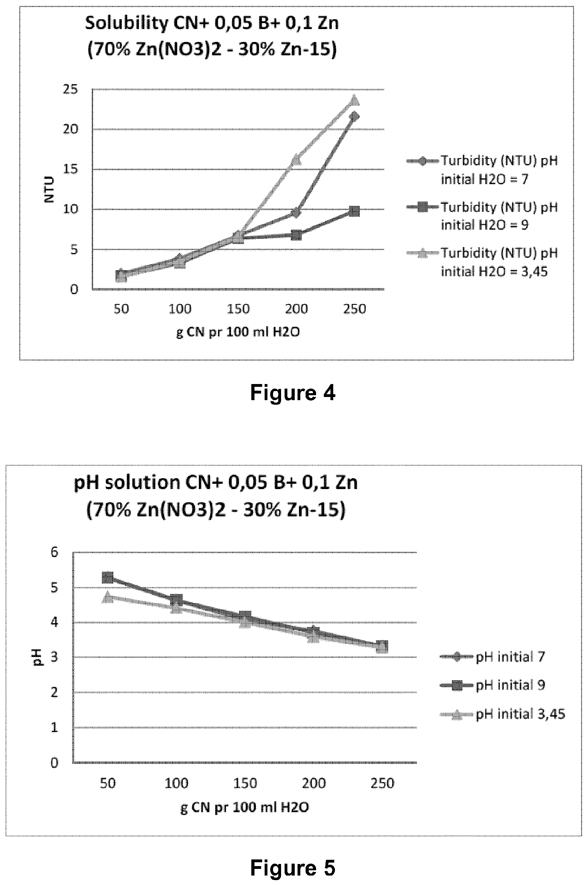

The solubility of the zinc grade with both Zn-chelate and zinc nitrate was checked. The results are given below. Solubility (measured as turbidity) is good (low turbidity) even at high concentrations. The turbidity is not depending on pH for concentrations up to 150 grams granules per 100 mL water, corresponding to about 50 weight% of salt concentration in the stock solution. This is far above normal stock solution concentrations. When concentration is increased from 70 to 80 grams granules per 100 mL water (salt concentration increased from 34.6 to 37.3 %), the turbidity has a sharp increase. The maximum concentration for full solubility is therefore about 70 grams granules per 100 mL. To be on the safe side, it is recommended to keep the maximum salt concentration in the stock solution below 31.5 %, corresponding to 60 grams granules per 100 mL. This should not be a problem, as fertigation grade fertilizers normally are dissolved to about 20 % salt concentration. The test was repeated with varying pH: Initial water pH 3.45, 7 and 9. The results of the tests are shown in Figures 4 and 5.

## Claims

1. A homogeneous solid particle comprising at least 50 weight% of calcium nitrate (calculated as Ca(NO₃)₂), 0 to 10 weight% of one or more of ammonium nitrate, potassium nitrate and sodium nitrate, and 0.01 to 0.2 weight% of at least one micronutrient, wherein the at least one micronutrient is zinc, which zinc is present as a zinc nitrate and as a zinc chelate, wherein zinc is bonded to a chelant selected from the group of ethylene diamine tetraacetic acid (EDTA), N-(hydroxyethyl)-ethylenediaminetriacetic acid (HEDTA), ethylene glycol tetraacetic acid (EGTA), ethylenediamine-N,N'-bis(2-hydroxyphenylacetic acid) (EDDHA), ethylenediamine-N,N'-bis-(2-hydroxy 5-sulpho) phenylacetic acid (EDDHSA) and diethylenetriaminepentaacetic acid (DTPA).

2. A homogeneous solid particle according to claim 1, wherein the particle's shape is spherical.

3. A homogeneous solid particle according to claim 1 or 2, comprising zinc EDTA, sodium zinc EDTA or disodium zinc EDTA.

4. A homogeneous solid particle according to any one of claims 1 to 3, wherein the calcium nitrate is selected from the group of anhydrous Ca(NO₃)₂, Ca(NO₃)₂·2H₂O, Ca(NO₃)₂·3H₂O, Ca(NO₃)₂·4H₂O and 5Ca(NO₃)₂·NH₄NO₃·10H₂O.

5. A homogeneous solid particle according to any one of claims 1 to 4, comprising 70 to 80 weight% of calcium nitrate, 5 to 10 weight% of ammonium nitrate, 5 to 20 weight% of water and 0.3 weight% of a zinc nitrate, wherein the homogeneous solid particle is spherical.

6. A homogeneous solid particle according to any one of claims 1 to 5, comprising of 70 to 80 weight% of calcium nitrate, 5 to 10 weight% of ammonium nitrate, 5 to 20 weight% of water, 0.2 weight% of zinc nitrate and 0.2 weight% of chelated zinc, wherein the homogeneous solid particle is spherical.

7. A homogeneous solid particle according to any one of claims 1 to 6 which further comprises a coating for reduction of caking, moisture uptake or dust formation.

8. A homogeneous solid particle according to any one of claims 1 to 7 coated with a water-soluble coating.

9. A homogeneous solid particle according to claim 8, wherein the water-soluble coating contains a boron source, preferably boric acid.

10. A particulate composition comprising the particles according to any one of claims 1 to 9.

11. A particulate composition according to claim 10, for use as a fertilizer, in particular for use in fertigation.

12. Use of a particulate composition according to claim 10 as a fertilizer, in particular for use in fertigation.

13. A method for producing homogeneous fertilizer particles, comprising the steps of
a. providing a first aqueous solution comprising dissolved calcium nitrate, dissolved ammonium nitrate and dissolved zinc nitrate and zinc EDTA in an amount sufficient to obtain an aqueous solution comprising 0.01 to 0.2 weight% of zinc;
b. heating the first aqueous solution to a temperature above 150°C to evaporate an amount of water and to obtain a second aqueous solution;
c. granulating particles from the second aqueous solution by spraying it through at least one nozzle, such that the droplets are solidified.

14. A method according to claim 13, wherein in step b) water is evaporated from the second aqueous solution until the water content of said second aqueous solution is below 20 weight%.

15. A method according to claim 13 or 14, wherein the first aqueous solution comprises more than 50 weight% of dissolved calcium nitrate and more than 30 weight% of water.

16. A method according to any one of claims 13 to 15, wherein the particles obtained by step c) are subsequently coated with a water-soluble coating, optionally comprising further micronutrients.

## Patentansprüche

1. Homogenes festes Teilchen, umfassend mindestens 50 Gew.% Calciumnitrat (berechnet als Ca(NO₃)₂), 0 bis 10 Gew.% von einem oder mehreren von Ammoniumnitrat, Kaliumnitrat und Natriumnitrat, und 0,01 bis 0,2 Gew.% von mindestens einem Mikronährstoff, wobei der mindestens eine Mikronährstoff Zink ist, wobei das Zink als ein Zinknitrat und als Zinkchelat vorhanden ist, wobei Zink an einen Chelatbildner ausgewählt aus der Gruppe von Ethylendiamintetraessigsäure (EDTA), N-(Hydroxyethyl)-ethylendiamintriessigsäure (HEDTA), Ethylenglykoltetraessigsäure (EGTA), Ethylendiamin-N,N'-bis(2-hydroxy-phenylessigsäure) (EDDHA), Ethylendiamin-N,N'-bis-(2-hydroxy-5-sulfo)phenylessigsäure (EDDHSA) und Diethylentriaminpentaessigsäure (DTPA) gebunden ist.

2. Homogenes festes Teilchen nach Anspruch 1, wobei das Teilchen von kugelförmiger Gestalt ist.

3. Homogenes festes Teilchen nach Anspruch 1 oder 2, umfassend Zink-EDTA, Natrium-Zink-EDTA oder Dinatrium-Zink-EDTA.

4. Homogenes festes Teilchen nach einem der Ansprüche 1 bis 3, wobei das Calciumnitrat ausgewählt ist aus der Gruppe von wasserfreiem Ca (NO₃)₂, Ca(NO₃)₂·2H₂O, Ca(NO₃)₂·3H₂O, Ca(NO₃)₂·4H₂O und 5Ca (NO₃)₂·NH₄NO₃·10H₂O.

5. Homogenes festes Teilchen nach einem der Ansprüche 1 bis 4, umfassend 70 bis 80 Gew.% Calciumnitrat, 5 bis 10 Gew.% Ammoniumnitrat, 5 bis 20 Gew.% Wasser und 0,3 Gew.% eines Zinknitrats, wobei das homogene feste Teilchen kugelförmig ist.

6. Homogenes festes Teilchen nach einem der Ansprüche 1 bis 5, umfassend 70 bis 80 Gew.% Calciumnitrat, 5 bis 10 Gew.% Ammoniumnitrat, 5 bis 20 Gew.% Wasser, 0,2 Gew.% eines Zinknitrats und 0,2 Gew.% cheliertes Zink, wobei das homogene feste Teilchen kugelförmig ist.

7. Homogenes festes Teilchen nach einem der Ansprüche 1 bis 6, das des Weiteren eine Beschichtung zur Reduktion von Klumpenbildung, Feuchtigkeitsaufnahme oder Staubbildung umfasst.

8. Homogenes festes Teilchen nach einem der Ansprüche 1 bis 7, das mit einer wasserlöslichen Beschichtung beschichtet ist.

9. Homogenes festes Teilchen nach Anspruch 8, wobei die wasserlösliche Beschichtung eine Borquelle enthält, vorzugsweise Borsäure.

10. Teilchenzusammensetzung, umfassend die Teilchen gemäß einem der Ansprüche 1 bis 9.

11. Teilchenzusammensetzung nach Anspruch 10 zur Verwendung als Düngemittel, insbesondere zur Verwendung in der Fertigation.

12. Verwendung einer Teilchenzusammensetzung nach Anspruch 10 als Düngemittel, insbesondere zur Verwendung in der Fertigation.

13. Verfahren zur Herstellung von homogenen Düngemittelteilchen, umfassend die Schritte:
a. Bereitstellen einer ersten wässrigen Lösung, die gelöstes Calciumnitrat, gelöstes Ammoniumnitrat und gelöstes Zinknitrat und Zink-EDTA in einer ausreichenden Menge umfasst, um eine wässrige Lösung zu erhalten, die 0,01 bis 0,2 Gew.% Zink umfasst;
b. Erwärmen der ersten wässrigen Lösung auf eine Temperatur von mehr als 150 °C, um eine Menge an Wasser zu verdampfen und eine zweite wässrige Lösung zu erhalten;
c. Granulieren von Teilchen aus der zweiten wässrigen Lösung, indem sie durch mindestens eine Düse gesprüht wird, so dass die Tröpfchen verfestigt werden.

14. Verfahren nach Anspruch 13, wobei in Schritt b) Wasser aus der zweiten wässrigen Lösung verdampft wird, bis der Wassergehalt der zweiten wässrigen Lösung unter 20 Gew.% liegt.

15. Verfahren nach Anspruch 13 oder 14, wobei die erste wässrige Lösung mehr als 50 Gew.% gelöstes Calciumnitrat und mehr als 30 Gew.% Wasser umfasst.

16. Verfahren nach einem der Ansprüche 13 bis 15, wobei die in Schritt c) erhaltenen Teilchen nachfolgend mit einer wasserlöslichen Beschichtung beschichtet werden, die gegebenenfalls weitere Mikronährstoffe umfasst.

## Revendications

1. Particule solide homogène comprenant au moins 50 % en poids de nitrate de calcium (calculé comme Ca(NO₃)₂), 0 à 10 % en poids d'un ou plusieurs parmi le nitrate d'ammonium, le nitrate de potassium et le nitrate de sodium, et 0,01 à 0,2 % en poids d'au moins un micronutriment, l'au moins un micronutriment étant le zinc, lequel zinc est présent en tant qu'un nitrate de zinc et en tant qu'un chélate de zinc, le zinc étant lié à un chélatant choisi dans le groupe de l'acide éthylènediaminetétraacétique (EDTA), l'acide N-(hydroxyéthyl)-éthylènediaminetriacétique (HEDTA), l'acide éthylèneglycoltétraacétique (EGTA), l'acide éthylènediamine-N,N'-bis(2-hydroxyphénylacétique) (EDDHA), l'acide éthylènediamine-N,N'-bis-(2-hydroxy-5-sulfo)phénylacétique (EDDHSA) et l'acide diéthylènetriaminepentaacétique (DTPA).

2. Particule solide homogène selon la revendication 1, la forme de la particule étant sphérique.

3. Particule solide homogène selon la revendication 1 ou 2, comprenant du EDTA-zinc, du EDTA-zinc sodium ou du EDTA-zinc disodium.

4. Particule solide homogène selon l'une quelconque des revendications 1 à 3, le nitrate de calcium étant choisi dans le groupe de Ca(NO₃)₂ anhydre, Ca(NO₃)₂·2H₂O, Ca(NO₃)₂·3H₂O, Ca(NO₃)₂·4H₂O et 5Ca(NO₃)₂·NH₄NO₃·10H₂O.

5. Particule solide homogène selon l'une quelconque des revendications 1 à 4, comprenant 70 à 80 % en poids de nitrate de calcium, 5 à 10 % en poids de nitrate d'ammonium, 5 à 20 % en poids d'eau et 0,3 % en poids d'un nitrate de zinc, la particule solide homogène étant sphérique.

6. Particule solide homogène selon l'une quelconque des revendications 1 à 5, comprenant 70 à 80 % en poids de nitrate de calcium, 5 à 10 % en poids de nitrate d'ammonium, 5 à 20 % en poids d'eau, 0,2 % en poids de nitrate de zinc et 0,2 % en poids de zinc chélaté, la particule solide homogène étant sphérique.

7. Particule solide homogène selon l'une quelconque des revendications 1 à 6 qui comprend en outre un revêtement pour la réduction du mottage, de l'absorption d'humidité ou de la formation de poussière.

8. Particule solide homogène selon l'une quelconque des revendications 1 à 7 revêtue avec un revêtement soluble dans l'eau.

9. Particule solide homogène selon la revendication 8, le revêtement soluble dans l'eau contenant une source de bore, préférablement l'acide borique.

10. Composition particulaire comprenant les particules selon l'une quelconque des revendications 1 à 9.

11. Composition particulaire selon la revendication 10, pour une utilisation en tant que fertilisant, en particulier pour une utilisation en fertigation.

12. Utilisation d'une composition particulaire selon la revendication 10 en tant que fertilisant, en particulier pour une utilisation en fertigation.

13. Procédé pour la production de particules de fertilisant homogènes, comprenant les étapes de
a. mise à disposition d'une première solution aqueuse comprenant du nitrate de calcium dissous, du nitrate d'ammonium dissous et du nitrate de zinc dissous et du EDTA-zinc en une quantité suffisante pour obtenir une solution aqueuse comprenant 0,01 à 0,2 % en poids de zinc ;
b. chauffage de la première solution aqueuse à une température supérieure à 150 °C pour évaporer une quantité d'eau et pour obtenir une deuxième solution aqueuse ;
c. granulation de particules à partir de la deuxième solution aqueuse en la pulvérisant à travers une première buse, de sorte que les gouttelettes soient solidifiées.

14. Procédé selon la revendication 13, dans lequel, dans l'étape b), l'eau est évaporée de la deuxième solution aqueuse jusqu'à ce que la teneur en eau de ladite deuxième solution aqueuse soit inférieure à 20 % en poids.

15. Procédé selon la revendication 13 ou 14, la première solution aqueuse comprenant plus de 50 % en poids de nitrate de calcium dissous et plus de 30 % en poids d'eau.

16. Procédé selon l'une quelconque des revendications 13 à 15, les particules obtenues par l'étape c) étant subséquemment revêtues avec un revêtement soluble dans l'eau, éventuellement comprenant d'autres micronutriments.
